(19) Europäisches Patentamt
European Patent Office
Office européen des brevets

(11) **EP 2 306 234 A2**

(12) **EUROPÄISCHE PATENTANMELDUNG**

(43) Veröffentlichungstag:
**06.04.2011 Patentblatt 2011/14**

(51) Int Cl.:
***G02B 27/46*** (2006.01)

(21) Anmeldenummer: **09180677.8**

(22) Anmeldetag: **23.12.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **02.10.2009 US 248305 P**

(71) Anmelder: **Fraunhofer-Gesellschaft zur Förderung der Angewandten Forschung e.V. 80686 München (DE)**

(72) Erfinder:
• **Ernst, Jürgen**
  **91052, Erlangen (DE)**
• **Schöberl, Michael**
  **91058, Erlangen (DE)**
• **Oberdörster, Alexander**
  **90403, Nürnberg (DE)**

(74) Vertreter: **Stöckeler, Ferdinand et al Schoppe, Zimmermann, Stöckeler & Zinkler Patentanwälte Postfach 246 82043 Pullach bei München (DE)**

(54) **Optischer Aliasfilter, Pixelsensoranordnung und digitale Aufnahmevorrichtung**

(57)     Brechung an einer geeignet strukturierten Oberfläche (14) bei beispielsweise Anordnung derselben zwischen Bildebene (18) und abbildender Optik wird verwendet, um auf der einen Seite eine gewünschte Aliasfilterung bzw. Ortstiefpassfilterung auf der Bildebene zu realisieren, wobei auf der anderen Seite die Herstellung solcher strukturierten Oberflächen kostengünstig realisierbar ist. Zudem ist die Plattendicke bis auf die Amplitude der Oberflächenstruktur und Aspekte der Stabilität der Platte für ihre Handhabbarkeit unerheblich, so dass die Integration in optische Systeme vereinfacht wird.

FIGUR 1

**Beschreibung**

Die vorliegende Erfindung bezieht sich auf optische Aliasfilter, Pixelsensoranordnungen aus einem Pixelsensor und einem optischen Aliasfilter und Pixelaufnahmevorrichtungen, wie z.B. Digitalkameras.

Bildsensoren (CCD oder CMOS) bestehen aus einzelnen lichtempfindlichen Pixeln, die in einem regelmäßigen Raster angeordnet sind. Das auf den Sensor projizierte Bild wird dadurch in Bildpunkte zerlegt. Durch diese Abtastung des Bildes im zweidimensionalen Bereich entstehen Aliaseffekte, wenn im Bild Ortsfrequenzen mit mehr als der halben Abtastfrequenz (Ortsfrequenz der Pixel) vorliegen. Die halbe Abtastfrequenz wird, wie auch in der Nachrichtentechnik, als Nyquistfrequenz bezeichnet.

Im Allgemeinen wird die "Bandbreite" der Ortsfrequenzen im projizierten Bild durch die Abbildungseigenschaften des Objektivs begrenzt. Man spricht in diesem Zusammenhang von der Modulations-Transfer-Funktion des Objektivs, im Folgenden als MTF bezeichnet. Sie ist die Darstellung der Übertragungsfunktion im Frequenzbereich. Die entsprechende Darstellung der Übertragungsfunktion im Ortsbereich wird als "Point-Spread-Function", kurz PSF, bezeichnet.

Bei hochwertigen Objektiven reicht die MTF bis über die Nyquistfrequenz des Sensors hinaus, so dass mehr oder weniger starke Aliaseffekte entstehen. Diese manifestieren sich im elektronischen Bild in Form von moiré-ähnlichen Mustern und farbigen Artefakten.

Zur definierten Begrenzung der Bandbreite der Ortsfrequenzen im Bild werden sogenannte Aliasfilter (auch optische Tiefpassfilter; optical low pass filter = OLPF) verwendet. Der Aliasfilter wird zwischen dem Objektiv und dem Sensor in den optischen Strahlengang eingefügt, und zwar üblicherweise parallel zur Sensoroberfläche.

Das Funktionsprinzip der handelsüblichen Aliasfilter beruht auf dem physikalischen Effekt der optischen Doppelbrechung. Konkret verwendet man eine oder mehrere planparallele Platten aus optisch aktiven Materialien, die hintereinander angeordnet und in der Regel verkittet sind. Als Material werden oft monokristalline Quarzkristalle verwendet; andere Materialien sind ebenso möglich. Die Platten sind in einer bestimmten Richtung aus dem Kristall geschnitten, so dass ein durch die Platte hindurch tretender Lichtstrahl in einen ordentlichen und einen außerordentlichen Lichtstrahl aufgespalten wird. Beide Teilstrahlen verlaufen im Medium divergent und werden beim Austritt aus dem Medium durch Brechung wieder parallel ausgerichtet. Auf diese Weise sind aus einem Strahl zwei Teilstrahlen entstanden. Der Abstand zwischen den beiden Teilstrahlen hängt von den optischen Eigenschaften des verwendeten Materials sowie von der Dicke der Platten ab. Da die Teilstrahlen parallel sind, ist die Wirkung des Aliasfilters unabhängig vom Ort zwischen Objektiv und Bildebene (Sensorfläche).

Verwendet man mehr als eine Platte, und dreht man die weiteren Platten hinsichtlich der Orientierung der optischen Achse um bestimmte Winkel in Bezug auf die erste Platte, dann werden die in der ersten Platte entstandenen Teilstrahlen sukzessive weiter zerlegt. Dabei entstehen im Allgemeinen $2^n$ Teilstrahlen, wobei n die Anzahl der Platten ist.

Durch die Zerlegung des ursprünglichen Strahls in zwei oder mehrere Teilstrahlen ergibt sich für den Aliasfilter eine Übertragungsfunktion, die zusammen mit der MTF des Objektivs und des Sensors zu einer mehr oder weniger starken Unterdrückung von Ortsfrequenzen oberhalb der Nyquistfrequenz führt. Durch geeignete Auslegung des Aliasfilters können Aliaseffekte im Bild somit gezielt abgeschwächt werden. Dabei wird jedoch zwangsläufig die Schärfe im Bild reduziert.

Damit der Aliasfilter eine gute Wirkung zeigt, muss das Bündel der Teilstrahlen einen Durchmesser haben, der ungefähr dem Abstand der Pixelmittelpunkte auf dem Sensor entspricht. Bei großen Pixeln, wie sie in hochwertigen Kameras verwendet werden, muss also der Abstand zwischen den Teilstrahlen entsprechend groß sein. Dazu benötigt man entweder relativ dicke Platten aus dem üblichen Material Quarz oder man verwendet Platten aus speziellen Werkstoffen, die eine stärkere Doppelbrechung aufweisen. Diese Werkstoffe sind jedoch wesentlich teurer als Quarz und schwieriger zu bearbeiten.

Wünschenswert wäre also ein Konzept für eine Anti-Aliasing-Filterung an der Hand zu haben, das leichter und unaufwendiger in optische Systeme integrierbar ist und/oder kostengünstiger realisierbar ist.

Daneben existieren Realisierungen von Aliasfiltern die auf Beugung basieren, wie sie in beispeisweise US 6040857, US6326998, US4178611, US4998800 und US4878737 beschrieben sind, aber diese Lösungen führen aufgrund der Beugungswirkweise zu einer wellenlängenabhängigen Alias- bzw. Tiefpassfilterung, was zu Bildqualitätsverschlechterungen führt.

Die Aufgabe der vorliegenden Erfindung besteht deshalb darin, einen optischen Aliasfilter, eine Pixelsensoranordnung und eine Pixelaufnahmevorrichtung sowie ein Bildaufnahmeverfahren zu schaffen, so dass eine Anti-Aliasing-Filterung leichter und/oder unaufwendiger in optische Systeme integrierbar oder kostengünstiger herstellbar ist, bzw. gegenüber beugungsbasierten Lösungen zu einer Bildqualitätsverbesserung führt.

Diese Aufgabe wird durch einen optischen Aliasfilter gemäß Anspruch 1, eine Pixelsensoranordnung gemäß Anspruch 10, eine Pixelaufnahmevorrichtung gemäß Anspruch 12 und ein Bilderzeugungsverfahren gemäß Anspruch 14 gelöst.

Die Erkenntnis der vorliegenden Erfindung besteht darin, dass durch Brechung an einer geeignet strukturierten Oberfläche bei beispielsweise Anordnung derselben zwischen Bildebene und abbildender Optik auf der einen Seite die gewünschte Aliasfilterung bzw. Ortstiefpassfilterung auf der Bildebene realisierbar ist und auf der anderen Seite die Herstellung solcher strukturierten Oberflächen kostengünstig realisierbar ist. Zudem ist die Plattendicke bis auf die Amplitude der Oberflächenstruktur und Aspekte der Stabilität der Platte für ihre Handhabbarkeit unerheblich, so dass die Integration in optische Systeme vereinfacht wird.

Bevorzugte Ausführungsbeispiele der vorliegenden Erfindung werden nachfolgend Bezug nehmend auf die beiliegenden Zeichnungen näher erläutert. Es zeigen:

Fig. 1 eine schematische Zeichnung zur Darstellung eines optischen Aliasfilters und dessen Funktionsweise gemäß einem Ausführungsbeispiel;

Fig. 2a,b Auftragungen von Übertragungsfunktionen im Ortsbereich (PSF), nämlich einmal, wie sie durch eine strukturierte Oberfläche eines optischen Aliasfil- ters gemäß einem Ausführungsbeispiel erhalten wird, und zum Vergleich einmal, wie sie durch eine Oberfläche mit abrupten Höhenänderungen bzw. Kanten erhalten wird;

Fig. 2c,d Auftragungen von Verteilungen von Wellenanteilen einer Oberflächenstruk- tur aufgetragen über die Frequenz, nämlich einmal einer strukturierten Oberfläche eines optischen Aliasfilter gemäß einem Ausführungsbeispiel sowie zum Vergleich diejenige einer Oberfläche mit abrupten Höhenände- rungen bzw. Kanten zum Vergleich;

Fig. 3 eine schematische Darstellung einer Pixelaufnahmevorrichtung gemäß ei- nem Ausführungsbeispiel; und

Fig. 4 eine schematische Darstellung einer Pixelsensoranordnung gemäß einem Ausführungsbeispiel.

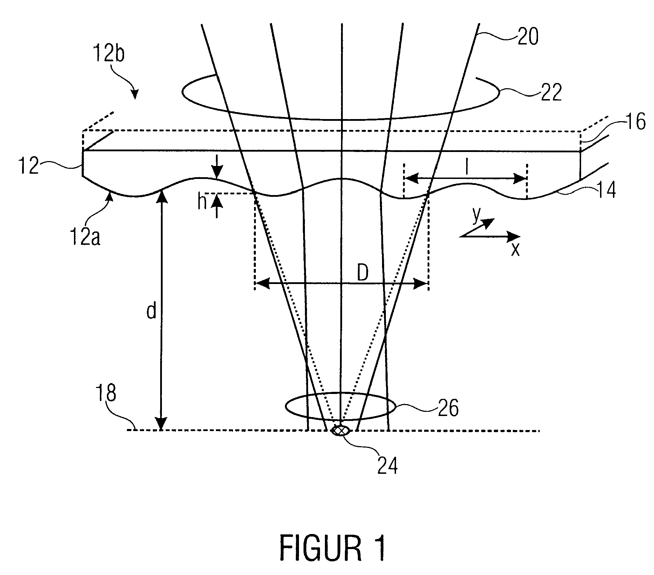

Fig. 1 zeigt einen optischen Aliasfilter 10 gemäß einem Ausführungsbeispiel der vorliegenden Erfindung. Der optische Aliasfilter 10 ist in Form einer Platte 12 aus einem optisch transparenten Material, wie z.B. Glas, einem aushärtbaren, transparenten Material oder einem thermoplastischen transparenten Material, wie z.B. durch Heißprägen oder Spritzgießen, gebildet.

Die Platte 12 weist zueinander abgewandte Hauptseiten 12a und 12b auf. Die Hauptseite 12a bildet eine strukturierte Oberfläche 14 mit einer Oberflächenstruktur, die eine besondere Form bzw. ein besonderes Ortsfrequenzspektrum aufweist, auf die bzw. das im Folgenden näher eingegangen wird, und die bzw. das insbesondere so beschaffen ist, dass die Platte 12, wenn sie zwischen Objektiv- und Bildebene angeordnet wird, eine Verschmierung der Bildpunkte bzw. eine Aufweitung der PSF des abbildenden Systems bewirkt, so dass Alias-Effekte reduziert werden. Die andere Hauptseite 12b der Platte 12 kann beispielsweise plan bzw. eben ausgebildet sein, wie es in Fig. 1 gezeigt ist.

Die Oberflächenstruktur der strukturierten Oberfläche 14 wird beispielsweise durch Abformung und Aushärten eines aushärtbaren Materials hergestellt, wodurch die Oberflächenstruktur 14 mit einer hohen Genauigkeit und einer hohen Reproduzierbarkeit durch ein entsprechend genaues Abformwerkzeug hergestellt werden kann. Andere Herstellungsverfahren wie Heißprägen oder andere sind ebenfalls möglich. Die Platte 14 muss nicht einstückig gebildet sein bzw. aus einem einzigen Material bestehen. Vielmehr kann beispielsweise in dem Fall der Verwendung eines abgeformten und ausgehärteten aushärtbaren Materials selbiges auf einem transparenten Substrat 16 angeordnet sein bzw. von demselben getragen werden. Die Anwesenheit eines transparenten Substrats ist optional, wie es in Fig. 1 mit der gestrichelten Darstellung angedeutet ist. Ferner muss die strukturierte Oberfläche 14 nicht notwendigerweise freiliegen. Sie könnte auch beschichtet sein, wie z.B. mit einer Anti-Reflex-Beschichtung oder sie könnte die Grenzfläche zwischen zwei Materialien bilden, die einen ausreichend hohen Unterschied im Brechungsindex aufweisen.

Details, wie die Oberflächenstruktur der strukturierten Oberfläche 14 beschaffen sein kann, werden im Folgenden noch näher erläutert. Auf jeden Fall ist sie allerdings so beschaffen, dass ihr Ortsfrequenzspektrum zu mehr als 85% in einem Ortsfrequenzbereich zusammengefasst ist, der von der Ortsfrequenz 0 beabstandet ist und so positioniert ist, dass Beugungseffekte für Licht an der Oberflächenstruktur kleiner sind als Brechungseffekte für Licht an der Oberflächenstruktur. In anderen Worten ausgedrückt, ist die Oberflächenstruktur der strukturierten Oberfläche 14 abgerundet bzw. wellig und besitzt keine abrupten Höhenänderungen bzw. Kanten und Ecken. Auf diese Weise entsteht ein hohes Maß an Brechungseffekten. Auf der anderen Seite ist die Welligkeit der Oberflächenstruktur der strukturierten Oberfläche 14 nicht so hochfrequent, dass in nennenswertem Umfang Beugungseffekte auftreten würden. In noch einmal anderen Worten ausgedrückt, soll beispielsweise die Oberflächenstruktur der strukturierten Oberfläche 14 so beschaffen sein, dass ein Lichtkegel mit einem Öffnungswinkel von 45˚, der die strukturierte Oberfläche lotrecht so passiert, dass eine laterale Ausdehnung des Querschnitts desselben am Ort der strukturierten Oberfläche 14 einem bestimmten Vielfachen der mittleren Periodenlänge der strukturierten Oberfläche 14, wie z.B. dem Ein-, Zwei-, Drei-, Zehn- oder Hundertfachen derselben oder einem Vielfachen zwischen diesen Werten, entspricht, eine Verbreiterung des Lichtflecks auf der Bildebene, auf die der Lichtbündel gebündelt wird, erfährt, die mehr durch die Brechungseffekte an der strukturierten Oberfläche 14 bestimmt ist als durch die Beugungseffekte an derselben.

Weitere Details bezüglich der Ausgestaltung der strukturierten Oberfläche 14 und ihrer Wirkweise bei der Anti-Aliasing-Filterung werden im Folgenden näher erläutert.

Sinn und Zweck des Aliasfilters 10 ist, wie gesagt, die Begrenzung der hohen Ortsfrequenzen bei der Projektion eines Bildes auf eine Fläche 18, wie z.B. die lichtempfindliche Fläche eines Pixelsensors, durch Ablenkung von Lichtstrahlen 20. Die Ablenkung der Strahlen 20 wird, wie es in Fig. 1 gezeigt ist, durch Brechung an der geeignet strukturierten Oberfläche 14 der Platte 12 bewirkt, die beispielsweise zwischen einem Objektiv und einem Bildsensor angeordnet ist, der die lichtempfindliche Fläche 18 besitzt. Die Platte 12 kann, wie erwähnt, dünn sein. Die minimale Dicke sollte allerdings ausreichen, um eine ausreichende mechanische Festigkeit der Platte 12 zu gewährleisten.

Die Oberflächenstruktur der strukturierten Oberfläche 14 kann durch eine zweidimensionale vom Ort abhängige Funktion beschrieben werden. Ebenso lässt sich diese Funktion mit den Mitteln der Fourier-Transformation in ein Spektrum von Ortsfrequenzen umwandeln. Vorzugsweise besitzt die Oberflächenstruktur der strukturierten Oberfläche 14 ein Ortsfrequenzspektrum, das über eine gewisse Fläche hinweg gleich bleibt. In Fig. 1 bleibt das Ortsfrequenzspektrum beispielsweise über die gesamte Oberfläche 12a hinweg gleich. Wie ebenfalls bereits erwähnt, besitzt ein Querschnitt der Struktur der strukturierten Oberfläche 14 keine Spitzen bzw. ist nicht dreieckig oder rechteckig und sie stellt auch kein Beugungsgitter dar. Die Wirkungsweise der strukturierten Oberfläche 14 ergibt sich vielmehr durch Brechung, wie es in Fig. 1 angedeutet ist und jetzt anhand dieser Figur erläutert wird.

Lichtstrahlen, die auf die strukturierte Oberfläche 14 treffen, werden nicht etwa unabhängig von dem Ort, auf den sie auftreffen, in gleicher Weise aufgespalten, sondern sie werden in Abhängigkeit vom lateralen Ort (x, y) durch Brechung an der strukturierten Oberfläche 14 in verschiedene Richtungen abgelenkt. Betrachtet man nun eine Vielzahl von Lichtstrahlen 20 eines Lichtbündels 22, der eigentlich, ohne Strukturierung der Oberfläche 14 an einem Bildpunkt 24 konvergieren würde, so ergibt sich im Mittel eine Ablenkung der Strahlen 20 in alle x/y-Richtungen und damit, in der Folge, eine Aufweitung des Lichtbündels in der Bildebene 18, in der sich der Bildpunkt 24 befindet bzw. eine Aufweitung 26 des entstehenden Lichtflecks in der Ebene 18.

Insbesondere ergibt sich bei einem konvergierenden Lichtbündel, das beispielsweise aus einem Objektiv kommt und sich in der Bildebene 18 in dem Punkt 24 trifft, eine Verbreiterung dieses Punktes 24, also eine gewisse Unschärfe, was wiederum der gewünschte Effekt bei der Alias-Reduzierung ist.

Wie soeben erwähnt, hängt die Brechung bzw. Ablenkung vom lateralen Ort ab. Umgekehrt soll aber die resultierende Unschärfe nicht von der Position des Lichtbündels auf der Platte bzw. dem betrachteten Bildpunkt auf der Bildebene 18 abhängen. Es ist deshalb vorteilhaft, wenn der Durchmesser bzw. die Ausdehnung D des Lichtbündels 22 in Höhe der strukturierten Oberfläche 14 eine gewisse Mindestgröße aufweist, die ungefähr so groß ist wie die mittlere Periode 1 bzw. die Strukturgröße der Oberflächenstruktur der strukturierten Oberfläche 14. Je nachdem kann als Mindestgröße auch die Periode der niederfrequentesten Ortsfrequenz der Oberflächenstruktur herangezogen werden. Da der Durchmesser D des Lichtbündels u.a. von der Blende bzw. Apertur des abbildenden optischen Systems, wie z.B. des Objektivs (nicht gezeigt), vorgegeben wird, sollte umgekehrt die soeben erwähnte mittlere Periode der Oberflächenstruktur der strukturierten Oberfläche 14 einen gewissen maximalen Wert nicht überschreiten. Insbesondere sollte beispielsweise 1 wenigstens kleiner als D bei maximaler Blendenöffnung gewählt werden, oder noch mehr bevorzugt beispielsweise kleiner als D/2, D/3, D/10 oder sogar D/20. Das bedeutet also, dass für das Spektrum der Ortsfrequenzen der Oberflächenstruktur der strukturierten Oberfläche 14 eine gewisse niederfrequente Grenze existiert.

Andererseits sollten die auftretenden Ortsfrequenzen bzw. die Strukturgröße der Oberflächenstruktur der strukturierten Oberfläche 14 auch zu kleineren Werten hin begrenzt sein. Ursache dafür ist die Beugung des Lichts an kleineren Strukturen. Zwar bewirkt die Beugung ebenfalls eine Vergrößerung des fokussierten Lichtpunkts 24 in der Bildebene 18, aber da das Ausmaß der Beugung von der Wellenlänge abhängig ist, wäre auch die resultierende Unschärfe eine Funktion der Wellenlänge, was wiederum unerwünscht ist.

Insgesamt ergibt sich also die Vergrößerung des Lichtpunkts 24 als eine Überlagerung der beiden beschriebenen Effekte, nämlich Brechung an der strukturierten Oberfläche 14 einerseits und Beugung an der Oberflächenstruktur der strukturierten Oberfläche 14 andererseits. Da nun aber die Vergrößerung des Lichtpunkts 24 nicht oder nur wenig von der Wellenlänge abhängig sein sollte, ist es zu bevorzugen, wenn die Beugungseffekte gegenüber den Brechungseffekten kleiner sind oder sogar in den Hintergrund treten. Da die Beugung bei kleineren Strukturen, d.h. hohen Ortsfrequenzen der Oberflächenstruktur der strukturierten Oberfläche 14, stärker wird, existiert somit eine Untergrenze für die in der Oberflächenstruktur 14 enthaltenen Wellenlängen. Anders ausgedrückt, besitzt vorteilhafterweise das Ortsfrequenzspektrum vorzugsweise eine hochfrequente Grenze. Diese sollte so gewählt werden, dass im gesamten von der Kamera genutzten Wellenlängenbereich, wie z.B. dem sichtbaren Bereich, die Ablenkung der Lichtstrahlen durch Beugung geringer ist als die beabsichtigte Ablenkung durch Brechung.

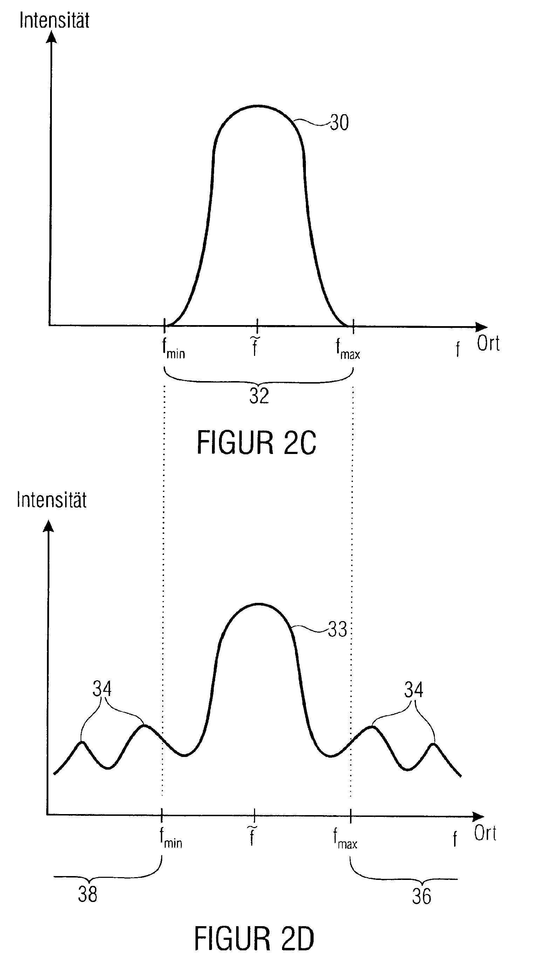

Anders ausgedrückt sollte das Ortsfrequenzspektrum der Oberflächenstruktur der strukturierten Oberfläche 14 vorwiegend, wie z.B. zu mehr als 85% oder sogar zu mehr als 95%, oder ausschließlich in einem Bereich zwischen oben beschriebener niederfrequenter und hochfrequenter Grenze liegen und ansonsten nur Werte gleich null oder nahe null aufweisen. In anderen Worten ausgedrückt, sollte das Integral des Ortsfrequenzspektrums von niederfrequenter bis hochfrequenter Grenze beispielsweise mindestens 85%, mindestens 95% oder sogar annähernd 100% der Gesamtfläche des Ortsfrequenzspektrums ergeben. Dies wird später noch einmal anhand Fig. 2c näher erläutert.

Die vorerwähnte niederfrequente und hochfrequente Grenze können beispielsweise zusammen einen Ortsfrequenzbereich von 100/mm bis 1/mm festlegen, was wiederum einen Bereich von Periodenlängen zwischen 10 $\mu$m und 1mm entspricht.

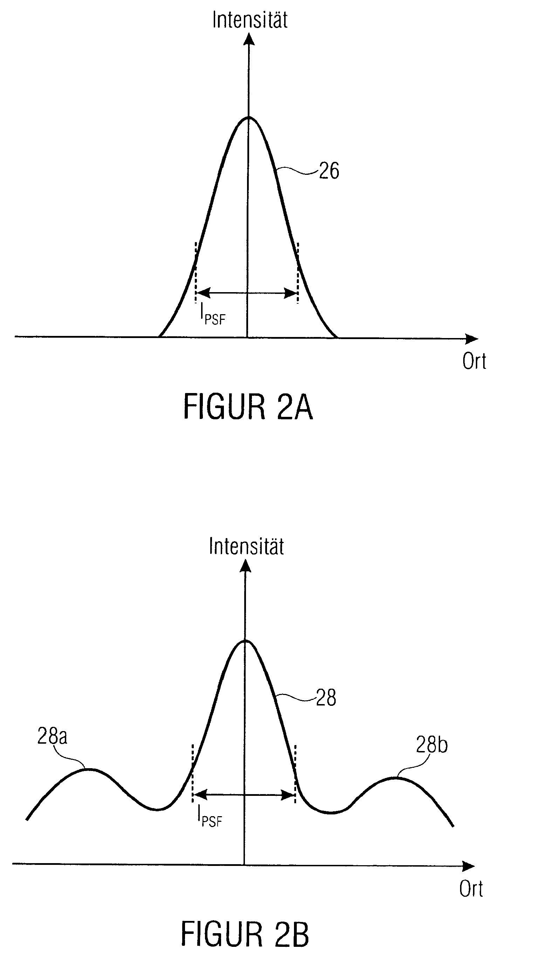

Zur Veranschaulichung ist in den Figuren 2a und 2b die Übertragungsfunktion bzw. der örtliche Mittelwert der PSF eines Aliasfilters gezeigt, der gemäß Fig. 1 überwiegend durch Brechung an einer entsprechend ausgestalteten Oberflächenstruktur mit spektralen Anteilen in vornehmlich einem mittleren Frequenzbereich die Aufweitung des Lichtbündels realisiert, wie es in Fig. 2a gezeigt ist, verglichen zu dem in Fig. 2b dargestellten Fall, wo die Aufweitung des Lichtbündels vornehmlich durch Beugung an hochfrequenten Anteilen in der Struktur realisiert wird. Wie es zu sehen ist, besteht ein Vorteil eines Aliasfilters gemäß Fig. 1 auch darin, dass seine PSF 26 keine Nebenmaximal aufweist, wohingegen eine durch Beugung verbreiterte PSF 28 Nebenmaxima 28a und 28b aufweist, was schlechtere Bilderfassungsergebnisse bei Abtastung mit Pixelsensoren nach sich ziehen kann. Zudem ist, wie es im Vorhergehenden bereits erwähnt worden ist, die Breite $1_{PSF}$ der PSF 28 in dem Fall der Beugung wellenlängenabhängig, wohingegen die $1_{PSF}$ der PSF 26 in dem Fall der Brechung von der Wellenlänge nahezu unabhängig ist, bzw. nur den geringfügigen Brechungsindexänderungen des Materials der Platte 12 bzw. des Materials, das die strukturierte Oberfläche 14 bildet, unterworfen ist.

Die Figuren 2c und 2d veranschaulichen den Unterschied zwischen dem Ortsfrequenzspektrum eines Ausführungsbeispiels für eine Oberflächenstruktur der strukturierten Oberfläche 14 gemäß der vorliegenden Erfindung verglichen zu dem Ortsfrequenzspektrum eines zur Bewirkung von Beugung vorgesehenen kantigen Oberflächenstrukturverlaufs. Fig. 2c zeigt das exemplarische Ortsfrequenzspektrum für eine Oberflächenstruktur der strukturierten Oberfläche 14, wohingegen Fig. 2d das Ortsfrequenzspektrum einer Beugungsoberflächenstruktur darstellen soll, wie z.B. eine Struktur aus sich abwechselnden kantigen Gräben und kantigen Erhöhungen. Beide Strukturen besitzen eine mittlere Periode bei der zugehörigen Ortsfrequenz $\tilde{f}$. Die mittlere Periode liege in dem vorerwähnten Frequenzbereich, der durch die niederfrequente und hochfrequente Grenze, hier $f_{max}$ und $f_{min}$ festgelegt ist. In dem exemplarischen Beispiel von Fig. 2c liegt nahezu 100% des Ortsfrequenzspektrums (30) der Oberflächenstruktur der strukturierten Oberfläche 14, in dem so festgelegten Frequenzbereich 32. Aufgrund der weichen Oberflächenstrukturänderungen ohne Kanten und abrupte Höhenänderungen der strukturierten Oberfläche 14 weist das Ortsfrequenzspektrum 30 kaum, in dem exemplarischen Fall von Fig. 2c sogar keine, spektralen Anteile außerhalb des Frequenzbereichs 32 und somit insbesondere auch keine Nebenmaxima auf. In dem Fall von Fig. 2d ist dies anders. Bei der Oberflächenstruktur von Fig. 2d handelt es sich exemplarisch um ein Beugungsgitter. Das zugehörige Ortsfrequenzspektrum 33 weist aufgrund des kantigen Aufbaus in Richtung der Gitterwiederholungen Nebenmaxima 34 auf, so dass in dem Fall des Ortsfrequenzspektrums 33 trotz der gleichen mittleren Ortsfrequenz f ein großer Anteil des Spektrums außerhalb des Frequenzbereichs 32 liegt. Das bedeutet wiederum, dass das Beugungsgitter in dem Bereich 36 oberhalb des Frequenzbereichs 32 eine hohe Beugung bewirkt, obwohl die gleiche mittlere Periodizität vorliegt wie in dem Fall von Fig. 2c. In dem exemplarischen Fall von Fig. 2d ist somit ein hoher Anteil des Ortsfrequenzspektrums 33 bei höheren Frequenzen 36 vorhanden, so dass der Anteil der Beugung groß ist, und ein weiterer großer Anteil ist in einem Bereich 38 unterhalb des gewünschten Frequenzbereichs 32 vorhanden, wodurch unerwünschte Effekte in Bezug auf die Gleichmäßigkeit der Unschärfewirkung realisiert werden, wie es im Vorhergehenden beschrieben wurde.

Natürlich kann ein Ortsfrequenzspektrum gemäß einem Ausführungsbeispiel der vorliegenden Erfindung auch anders aussehen als dasjenige, das in Fig. 2c exemplarisch dargestellt wurde, solange nur, wie im Vorhergehenden erwähnt, ein ausreichender Flächenanteil des Ortsfrequenzspektrums 30 innerhalb des Bereiches 32 liegt.

Das Ortsfrequenzspektrum der Oberflächenstruktur der strukturierten Oberfläche 14 bestimmt also die PSF der Platte 12 bzw. des optischen Aliasfilters 10. Wie beschrieben kann durch geeignete Formgebung der Oberfläche 14 die PSF so angepasst werden, dass Aliaseffekte möglichst klein werden und gleichzeitig die Schärfe im Bild möglichst hoch ist.

Es kann sein, dass die Fläche des Ortsfrequenzspektrums 30 nicht vollständig, aber beispielsweise zu mehr als 85% oder sogar 95% in dem Ortsfrequenzbereich 32 zwischen $f_{max}$ und $f_{min}$ angeordnet ist. Das Ortsfrequenzspektrum 30 kann wie beschrieben ein absolutes Maximum innerhalb des Ortsfrequenzbereichs 32 aufweisen und dabei keine Nebenmaxima. Wenn aber Nebenmaxima vorhanden sind, wird es bevorzugt, wenn auch sie innerhalb des Ortsfrequenzbereichs 32 liegen.

Obwohl im Vorhergehenden nicht darauf eingegangen wurde, kann es sein, dass das Ortsfrequenzspektrum in x- und y-Richtung, d.h. in zwei zueinander orthogonalen lateralen Richtungen, gleich ist. Das Gegenteil ist allerdings ebenfalls möglich. So kann das Ortsfrequenzspektrum in den beiden lateralen Richtungen unterschiedlich sein, um bestimmte Effekte zu erzielen, oder um an eine entsprechende Anisotropie eines zusammenwirkenden Pixelarrays angepasst zu sein.

Ferner wird darauf hingewiesen, dass obwohl in Fig. 1 angedeutet ist, dass es sich bei der Oberflächenstruktur der strukturierten Oberfläche 14 um eine Sinus- oder Cosinus-Welle handelt, dies nicht notwendigerweise so sein muss. Eine periodische Wellenform ist ebenfalls nicht zwangsläufig notwendig. Eine unregelmäßige Oberflächenstruktur ist vielmehr ebenfalls möglich.

Wie im Vorhergehenden ebenfalls bereits angedeutet wurde, kann auf der Oberfläche 14 zur Vermeidung von Lichtreflektionen eine Entspiegelung vorgesehen sein. Eine Entspiegelung kann auch auf der gegenüberliegenden Hauptseite 12b vorgesehen sein.

Wird das optische Aliasfilter 10 zwischen einer abbildenden Optik, wie z.B. einem Objektiv, und der dazugehörigen Bildebene angeordnet, so ist prinzipiell die genaue Position der Platte 12 bzw. der strukturierten Oberfläche 14 zwischen denselben beliebig. Allerdings sollte die Oberflächenstruktur eben, wie oben erwähnt, an diese Position angepasst sein, denn je nach Position ist der Durchmesser des vorerwähnten Lichtbündels 22, der auf einen jeweiligen Bildpunkt 24 fällt, d.h. D, unterschiedlich groß. Für eine bestimmte Oberflächenstruktur ist eine vorgegebene Position der Platte in einem bestimmten Abstandsverhältnis zur Bildebene auf der einen Seite und der abbildenden Optik auf der anderen Seite vorteilhaft. Aus praktischen Gründen kann es sein, dass es vorteilhaft ist, die Platte 12 bzw. die strukturierte Oberfläche 14 nahe beim Sensor bzw. nahe der Bildebene 18 zu platzieren. Das ist deshalb vorteilhaft, weil dann die Amplitude h der Oberflächenstruktur der strukturierten Oberfläche 14 in einem Bereich liegt, der fertigungstechnisch günstig ist. Des Weiteren kann, wie es im Folgenden noch gezeigt wird, die Platte 12 zugleich als Schutzdeckel für den Bildsensor dienen, dessen lichtempfindliche Fläche in der Bildebene 18 liegt.

Insbesondere ist es beispielsweise vorteilhaft, wenn folgender Zusammenhang zwischen dem Abstand d zwischen Bildebene 18 und strukturierter Oberfläche 14, der mittleren Periode 1 der Oberflächenstruktur der Oberfläche 14, der Amplitude h letzterer und des Pixelmittenabstands $d_p$ eingehalten wird:

$$0{,}1 \cdot d_p \leq \frac{0{,}7 \cdot h}{l} \cdot d \leq 10 \cdot d_p$$

$$(1)$$

Die Amplitude h der Oberflächenstruktur kann beispielsweise als die Hälfte des Spitze-Spitze-Werts der Oberflächenstruktur oder als ein anderes Maß der Dispersion des Oberflächenverlaufs der Oberfläche 14, beispielsweise bezogen auf ein laufender Fenster, definiert sein, wie z.B. als die Spannweite, die Standardabweichung, die mittlere absolute Abweichung, den Interquartilenabstand usw. Zusätzlich kann es bevorzugt sein, wenn

- der Abstand d zwischen der strukturierten Oberfläche 14 und der lichtempfindlichen Fläche in einem Bereich zwischen einem 20- und 200-fachen eines Pixelmittenabstands des Pixelsensors liegt, dessen lichtempfindliche Fläche in der Bildebene 18 liegt,

- der Ortsfrequenzbereich 32 dem Bereich von 100/mm bis 1/mm entspricht,

Werden die Parameter wie in obiger Ungleichung gemäß einem Ausführungsbeispiel eingestellt, so ergibt sich eine gewünschte Unschärfeverstärkung bzw. Aliasing-Reduktion. Andere Einstellungen sind aber ebenfalls möglich.

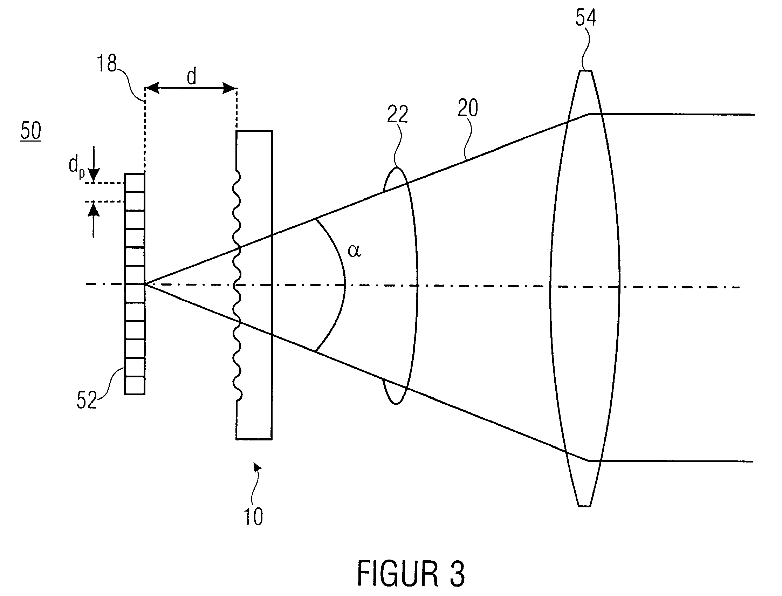

Fig. 3 zeigt den Einbau eines optischen Aliasfilters 10 gemäß Fig. 1 in eine Pixelaufnahmevorrichtung, die allgemein mit 50 angezeigt ist. Die Pixelaufnahmevorrichtung 50 der Fig. 3 umfasst neben dem optischen Aliasfilter 10 einen Pixelsensor bzw. ein Pixel-Array 52 mit einem bestimmten Pixelmittenabstand dp sowie eine abbildende Optik 54, die in dem Fall von Fig. 3 der Einfachheit halber als eine einfache Sammellinse dargestellt ist. Eine lichtempfindliche Fläche des Pixelsensors 52 befindet sich in der Bildebene 18 der abbildenden Optik 54. Der optische Aliasfilter 10 ist im Strahlengang zwischen abbildender Optik 54 und Pixelsensor 52 angeordnet.

Bei dem Pixelsensor 52 kann es sich beispielsweise um einen CCD- oder einen CMOS-Sensor handeln. Die abbildende Optik 54 kann ein geeignetes Objektiv sein, wie z.B. ein Festbrennweitenobjektiv oder ein Zoomobjektiv. Der Pixelsensor 52 kann analog oder digital sein. Dementsprechend kann es sich bei der Pixelaufnahmevorrichtung 54 um eine digitale Aufnahmevorrichtung handeln, wie z.B. eine Digitalkamera zur Aufnahme von Stand- und/oder Bewegt/Videobildern. Aufgrund der Verwendung des optischen Aliasfilters 10 besitzt die Pixelaufnahmevorrichtung 50, wie oben beschrieben, reduzierte Aliaseffekte. Der Ortsfrequenzbereich 32 aus Fig. 2c und d kann sich beispielsweise von einer Periodenlänge von 10 Mikrometern bis zu einer Periodenlänge von Zwei mal dem Sinus der Hälfte des bildseitigen Öffnungswinkels $\alpha$ der abbildenden Optik 54 multipliziert mit dem Abstand d zwischen der strukturierten Oberfläche und der lichtempfindlichen Fläche des Pixelsensors 52, d.h. $2 \cdot \sin(\alpha/2)$, liegen.

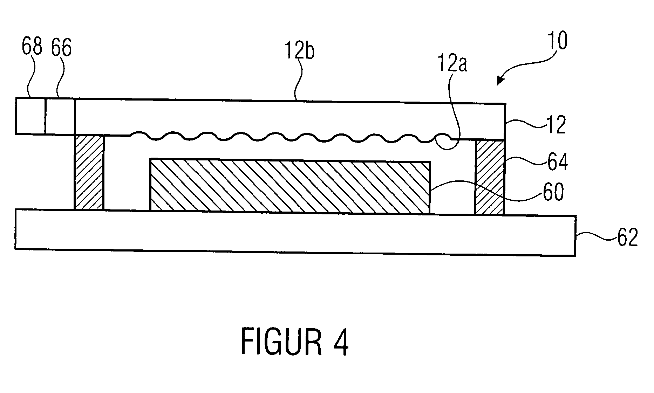

In manchen Fällen kann es vorteilhaft sein, die Platte des optischen Aliasfilters von Fig. 1 zu bewegen. Hierzu wird ein Ausführungsbeispiel Bezug nehmend auf Fig. 4 beschrieben. Falls beispielsweise aus bestimmten Gründen die minimale Ortsfrequenz der Oberflächenstruktur der strukturierten Oberfläche niedriger sein muss als der in obiger Figurenbeschreibung angegebene Wert, so kann auf dem Bildsensor durch ungenügende Mittelung eine Inhomogenität der Beleuchtungsstärke auftreten, die sich dem eigentlichen Bild als Störung überlagert. Dies kann vermieden werden, wenn sich die Platte, und damit die Oberflächenstruktur, schnell bewegt. Die Geschwindigkeit der Bewegung muss so groß sein, dass sich innerhalb der Belichtungszeit eines Bildes die Inhomogenitäten der Beleuchtungsstärke an jedem Punkt des Bildes mitteln. Die Bewegung ist vorzugsweise rein lateral und kann beispielsweise Rotation und/oder Translation umfassen.

Die Bewegung der Platte 12 kann also beispielsweise durch eine rotierende oder oszillierende Bewegung in der Ebene der Platte 12, im Folgenden als x-y-Ebene bezeichnet, erfolgen. Die Bewegung kann nur in einer Richtung, wie z.B. x, oder gleichzeitig in zwei Richtungen erfolgen (x und y). Die oszillierende Bewegung kann in unterschiedlichen Richtungen mit unterschiedlicher Amplitude und mit unterschiedlicher Frequenz erfolgen. Der Abstand der Platte zum Sensor ändert sich dabei vorzugsweise im Wesentlichen nicht. Die Bewegung der Platte kann durch geeignete mechanische Aktuatoren hervorgerufen werden, wie z.B. piezo- oder magnetbasierten Aktuatoren. Durch geeignete Anlegung der Kräfte an die Platte 12 kann mittels eines einzigen Aktuators eine oszillierende Bewegung in beide Richtungen der Plattenebene erzeugt werden. Es können aber auch mehrere Aktuatoren verwendet werden.

Vorzugsweise ist die Platte elastisch aufgehängt, so dass sie sich in der x-y-Ebene bewegen kann, während sie vorzugsweise in z-Richtung in ihrer Bewegung eingeschränkt bzw. unbeweglich ist. Die Steifigkeit der Aufhängung kann beispielsweise in z-Richtung, d.h. in Flächennormalenrichtung zur Oberfläche 14 wesentlich höher als in der x-y-Ebene sein.

Bei dem Ausführungsbeispiel von Fig. 4, das nun beschrieben wird, dient die Platte 12 neben ihrer optischen Funktion als optisches Aliasfilter ferner als Schutzdeckel eines Gehäuses zur Kapselung eines Pixel- bzw. Bildsensors bzw. Pixel-Arrays 60. Die Platte 12 ist elastisch aufgehängt. In dem exemplarischen Beispiel von Fig. 4 ist der Bildsensor 60 in einem Gehäuse hermetisch abgedichtet angeordnet, das von einer Trägerplatte 62, auf der der Bildsensor 60 angeordnet ist, den Schutzdeckel in Form der Platte 12 und Seitenwänden 64 gebildet wird. In dem exemplarischen Ausführungsbeispiel von Fig. 4 sind die Seitenwände bzw. ist die umlaufende Wand 64 aus einem elastischen Werkstoff gebildet, und bilden somit die elastische Aufhängung des optischen Aliasfilters 10 bzw. der Platte 12. Der elastische Werkstoff lässt Biegebewegungen in Folge einer lateralen Oszillation der Platte 12 zu und sorgt somit für eine Aufhängung der Platte 12, die eine laterale Oszillation der Platte 12 zulässt. Bei Bewegung der Platte 12 in Flächennormalenrichtung bzw. Dickenrichtung wird der elastische Werkstoff 64 gequetscht bzw. gedehnt, bei allerdings deutlich erhöhter Steifigkeit als in dem Fall der Biegung der lateralen Bewegung der Platte 12.

In dem Fall von Fig. 4 ist also die elastische Aufhängung 64 Teil des Sensorgehäuses, in welchem der Bildsensor 60 hermetisch dicht angeordnet ist, wodurch der Bildsensor 60 unter anderem auch durch die Platte 12 komplett gegenüber der Umwelt abgedichtet ist. Der elastische Bewegungsbereich der Platte 12 kann durch geeignete Maßnahmen mechanisch eingeschränkt werden, wozu allerdings in Fig. 4 der Übersichtlichkeit halber keine Beispiele gezeigt sind. Möglichkeiten hierfür wären mechanisch feste Anschläge, die die Bewegungsfreiheitsgrade bzw. die Auslenkungsmöglichkeiten der Platte 12 einschränken. Auf diese Weise wird die elastische Aufhängung 64 bei der Einwirkung äußerer Kräfte auf die Platte 12 nicht überlastet. Äußere Kräfte können beispielsweise bei der Reinigung der zum Objektiv zu richtenden Plattenoberfläche 12b entstehen.

In Fig. 4 ist ein Aktuator exemplarisch mit 66 angezeigt. Der Aktuator ist beispielsweise so mit der Platte 12 verbunden, dass der Aktuator 66 eine Kraft in lateraler Richtung auf die Platte 12 ausübt und in entgegengesetzter Richtung eine gleiche Kraft auf eine freie Masse 68, wodurch insgesamt durch den elastischen Werkstoff 64, die Masse 68 und die Platte 12 ein Feder-Masse-System gebildet wird, das eine Resonanzfrequenz besitzt, wobei der Antrieb 66 vorzugsweise mit der Resonanzfrequenz oder in der Nähe davon betrieben wird. Die Antriebsleistung, die von dem Aktuator 66 in die Bewegung der Platte 12 gesteckt wird, wird hauptsächlich durch die Verluste in der elastischen Aufhängung 64 in Wärme umgewandelt. Um die Antriebsleistung zu verringern, sollten die Verluste in der elastischen Aufhängung 64 reduziert werden, was beispielsweise durch eine Verringerung der Federkonstante der elastische Aufhängung 64 erzielt werden kann. Hierdurch allerdings wird auch die Resonanzfrequenz des Feder-Masse-Systems niedriger. Um trotzdem eine höhere Eigenfrequenz zu erhalten, können an der Platte 12 zusätzliche mechanische Feder-Masse-Systeme angebracht werden, die zusammen mit der Platte einen Doppel- bzw. Mehrfachschwinger bilden. Der Antrieb der Platte 12 kann auch in anderer Weise realisiert sein. Ebenso kann die Frequenz der Anregung von der Resonanzfrequenz wesentlich abweichen. Die Anregung kann mit einer bestimmten Frequenz oder auch mit der Überlagerung verschiedener Frequenzen und jeweils verschiedener Amplituden erfolgen.

Fig. 4 bildet somit eine Pixelsensoranordnung mit Pixelsensor 60 und optischem Aliasfilter 10. Die Doppelverwendung der Platte 12 als optisches Aliasfilter und Schutzdeckel des Gehäuses des Pixelsensors 60 ist optional. Ebenso kann die elastische Aufhängung anders realisiert werden bzw. zusätzlich zu einem eventuellen Gehäuse des Bildsensors vorhanden sein. Zudem war bei den vorangehenden Ausführungsbeispielen die strukturierte Oberfläche 14 stets als dem Bildsensor zugewandte Oberfläche dargestellt worden. Umgekehrtes Anordnen der Platte in den Strahlengang wäre aber ebenfalls denkbar.

Die im Vorhergehenden beschriebenen Ausführungsbeispiele ermöglichen somit eine Anti-Aliasing-Filterung in einer extrem unaufwendigen, kostengünstigen und dabei qualitativ ausreichenden Art und Weise. Insbesondere können obige Ausführungsbeispiele auch bei knappen Platzverhältnissen, die den Einsatz herkömmlicher Aliasfilter aus Quarz verhindern, verwendet werden. Außerdem ermöglichen die obigen Ausführungsbeispiele eine Parametrierbarkeit der PSF des Aliasfilters durch entsprechende Oberflächenform, da ja die PSF durch entsprechende Oberflächenformung in weiten Grenzen beeinflussbar ist.

So haben dicke Platten den Nachteil, dass sie den Strahlengang zwischen Objektiv und Bildsensor durch optische Wegverlängerung beeinflussen. Dies führt dazu, dass sich die Abbildungseigenschaften des Objektivs in Kombination mit der Platte (Aliasfilter) verschlechtern. Diese Aussage bezieht sich nicht auf die gewollt reduzierte MTF, sondern auf Abbildungsfehler wie sphärische und chromatische Aberration, Bildfeldwölbung und andere. Weiterhin haben dicke Platten den Nachteil, dass sie aufgrund konstruktiver Gegebenheiten des Kameragehäuses und des Objektivs in manchen Fällen nicht in den freien Raum zwischen Objektiv und Bildsensor passen. Die Plattendicke kann gemäß obigen Ausführungsbeispielen dünn gehalten werden, weshalb obige Nachteile vermieden werden können. Platten aus speziellen Materialien mit speziell hohem Brechungsindex sind ebenfalls nicht erforderlich. Die Schärfe im Bild wird durch die Tiefpasswirkung des Aliasfilters reduziert, und zwar im Allgemeinen um so mehr, je stärker die Aliaseffekte unterdrückt werden. Um einen optimalen Kompromiss zwischen Unterdrückung von Aliaseffekten und dabei entstehender Unschärfe im Bild zu erzielen, ist die Vorgabe einer weitestgehend beliebigen PSF erforderlich, was bei obigen Ausführungsbeispielen möglich ist.

Obige Ausführungsbeispiele können somit beispielsweise bei elektronischen Kameras mit einem Bildsensor eingesetzt werden, dessen lichtempfindliche Fläche aus einzelnen Pixeln aufgebaut ist. Bei dem Sensor kann es sich wie oben erwähnt beispielsweise um einen CCD- oder CMOS-Sensor handeln.

Gemäß einem Ausführungsbeispiel ist somit ein optischer Aliasfilter, der auch als Anti-Alias-Filter bezeichnet werden könnte, in Form einer Platte mit einer strukturierten Oberfläche mit einer Oberflächenstruktur gebildet, die ein Ortsfrequenzspektrum mit signifikanten Anteilen größer als null in einem "mittleren" Bereich zwischen einer unteren und einer oberen Frequenzgrenze aufweist, so dass Beugungseffekte für Licht an der Oberflächenstruktur kleiner sind als Brechungseffekte für Licht an derselben. Das Ortsfrequenzspektrum liegt im Bereich von 100/mm bis 1/mm; die Perioden liegen also in einem Bereich von 10 Mikrometer bis 1 Millimeter.

Gemäß einem weiteren Ausführungsbeispiel umfasst eine Digitalaufnahmevorrichtung oder Digitalkamera einen Pixelsensor mit einem vorbestimmten Pixelmittelpunktabstand, eine kollimierende Optik, wie z.B. ein Objektiv, zur Projektion auf den Pixelsensor, so dass sich an Pixeln des Bildsensors konvergierende Strahlenbüschel treffen, und einen optischen Aliasfilter, der zwischen dem Bildsensor und der kollimierenden Optik angeordnet ist und in Form einer Platte mit einer strukturierten Oberfläche gebildet ist. Die Oberflächenstruktur kann ein Ortsfrequenzspektrum mit signifikanten Anteilen größer als null in einem "mittleren" Bereich zwischen einer unteren und einer oberen Frequenzgrenze aufweisen, bei dem Beugungseffekte für das Strahlbündel an der Oberflächenstruktur kleiner sind als Brechungseffekte. Das Ortsfrequenzspektrum liegt im Bereich von 100/mm bis 1/mm; die Perioden liegen also in einem Bereich von 10 Mikrometer bis 1 Millimeter.

Der Aliasfilter befindet sich näher am Sensor als am Objektiv, vorzugsweise liegt der Abstand der strukturierten Oberfläche zur Sensoroberfläche im Bereich des 20-fachen 200-fachen Pixelmittenabstands.

In wiederum anderen Worten ausgedrückt, kann gemäß einem Ausführungsbeispiel ein optischer Aliasfilter, der auch mit Anti-Aliasing-Filter bezeichnet werden könnte, in Form einer Platte mit einer strukturierten Oberfläche mit einer Oberflächenstruktur gebildet sein, die ein Ortsfrequenzspektrum mit einem Peak in einem Frequenzbereich aufweist, bei dem Beugungseffekte für Licht an der Oberflächenstruktur kleiner sind als Brechungseffekte für Licht an derselben, und der unterhalb von beispielsweise 1 mm$^{-1}$ oder, alternativ, ¼ mm$^{-1}$ liegt. Und gemäß einem wiederum weiteren Ausführungsbeispiel kann eine Digitalaufnahmevorrichtung oder Digitalkamera einen Pixelsensor mit einem vorbestimmten Pixelmittelpunktabstand, eine kollimierende Optik, wie z.B. ein Objektiv, zur Projektion auf den Pixelsensor, so dass sich an Pixeln des Pixelsensors konvergierende Strahlenbündel treffen, und einen optischen Aliasfilter umfassen, der zwischen dem Pixelsensor und der kollimierenden Optik angeordnet ist und in Form einer Platte mit einer strukturierten Oberfläche gebildet ist. Die Oberflächenstruktur kann ein Ortsfrequenzspektrum mit einem Peak in einem Frequenzbereich aufweisen, bei dem Beugungseffekte für das Strahlenbündel an der Oberflächenstruktur kleiner sind als Brechungseffekte, und dessen korrespondierende Periode unterhalb von beispielsweise ½ oder, alternativ, ¼, oder in einem Bereich des 0,1-fachen bis 10-fachen einer mittleren lateralen Ausdehnung des konvergierenden Strahlenbündels in der strukturierten Oberfläche liegt. Zudem kann sich die Transparenz der Aliasfilters beispielsweise auf sichtbares, IR- oder UV-Licht oder eine Kombination derselben beschränken. Alternativ wäre ein Transparenzbereich darüber hinaus ebenfalls denkbar. Die Brechungsindexbeziehungen, die oben erwähnt wurden, können auf beispielsweise die mittlere Wellenlänge des Transparenzbereichs bezogen sein.

**Patentansprüche**

1. Optischer Aliasfilter, der in Form einer Platte (12) mit einer strukturierten Oberfläche (14) mit einer Oberflächenstruktur gebildet ist, die ein Ortsfrequenzspektrum (30) aufweist, das sich zu mehr als 85% in einem Ortsfrequenzbereich (32) befindet, der von der Ortsfrequenz null beabstandet ist und so positioniert ist, dass Beugungseffekte für Licht an der Oberflächenstruktur kleiner sind als Brechungseffekte für Licht an der Oberflächenstruktur.

2. Optischer Aliasfilter gemäß Anspruch 1, bei dem der Ortsfrequenzbereich (32) zwischen 100/mm bis 1/mm liegt.

3. Optischer Aliasfilter gemäß Anspruch 1 oder 2, bei dem der optische Aliasfilter ein entsprechend der Oberflächenstruktur abgeformtes, ausgehärtetes aushärtbares transparentes Material, thermoplastisches transparentes Material oder Glas aufweist.

4. Optischer Aliasfilter gemäß einem der vorhergehenden Ansprüche, bei dem die Platte (12) in lateraler Richtung schwingfähig aufgehängt ist.

5. Optischer Aliasfilter gemäß einem der vorhergehenden Ansprüche, der ferner einen Antrieb (66) aufweist, um die Platte (12) lateral zu bewegen.

6. Optischer Aliasfilter gemäß einem der vorhergehenden Ansprüche, bei dem das Ortsfrequenzspektrum (30) zu mehr als 95% in dem Ortsfrequenzbereich angeordnet ist.

7. Optischer Aliasfilter gemäß einem der vorhergehenden Ansprüche, bei dem das Ortsfrequenzspektrum (30) ein absolutes Maximum innerhalb des Ortsfrequenzbereichs (32) aufweist und keine Nebenmaxima aufweist oder Nebenmaxima aufweist, die innerhalb des Bereichs (32) liegen.

8. Optischer Aliasfilter gemäß einem der vorhergehenden Ansprüche, bei dem eine der strukturierten Oberfläche (14) abgewandte Seite der Platte (12) eben ist.

9. Optischer Aliasfilter gemäß einem der vorhergehenden Ansprüche, bei dem die strukturierte Oberfläche beschichtet ist oder die Grenzfläche zwischen zwei Materialen mit unterschiedlichem Brechungsindex bildet.

10. Pixelsensoranordnung mit einem Pixelsensor (60) und einem optischen Aliasfilter (10), der in Form einer Platte (12) mit einer strukturierten Oberfläche (14) mit einer Oberflächenstruktur gebildet ist, die ein Ortsfrequenzspektrum aufweist, das sich zu mehr als 85% in einem Ortsfrequenzbereich befindet, der von der Ortsfrequenz null beabstandet ist und so positioniert ist, dass Beugungseffekte für Licht an der Oberflächenstruktur kleiner sind als Brechungseffekte für Licht an der Oberflächestruktur, wobei der optische Aliasfilter (10) unter Beabstandung der strukturierten Oberfläche (14) von einer lichtempfindlichen Fläche des Pixelsensors (60) zu einer lichtempfindlichen Seite des Pixelsensors angeordnet ist.

11. Pixelsensoranordnung gemäß Anspruch 9, bei der ein Abstand (d) zwischen der strukturierten Oberfläche (14) und der lichtempfindlichen Fläche in einem Bereich zwischen einem 20-200-fachen eines Pixelmittenabstands des Pixelsensors (60) liegt.

12. Pixelaufnahmevorrichtung mit
einem Pixelsensor (52);
einer abbildenden Optik (54) zur Projektion auf dem Pixelsensor (52), so dass sich an Pixeln des Pixelsensors (52) konvergierende Strahlenbündel (20) treffen; und
einem optischen Aliasfilter (10), der zwischen dem Pixelsensor (52) und der abbildenden Optik (54) angeordnet ist und in Form einer Platte (12) mit einer strukturierten Oberfläche (14) gebildet ist, die eine Oberflächenstruktur aufweist, die ein Ortsfrequenzspektrum (30) aufweist, das sich zu mehr als 85% in einem Ortsfrequenzbereich (32) von einer Periodenlänge von 10 Mikrometern bis zu einer Periodenlänge von Zwei mal dem Sinus der Hälfte eines bildseitigen Öffnungswinkels der abbildenden Optik (54) multipliziert mit einem Abstand (d) zwischen der strukturierten Oberfläche und einer lichtempfindlichen Fläche des Pixelsensors (52) befindet.

13. Pixelaufnahmevorrichtung gemäß Anspruch 11, wobei folgender Zusammenhang zwischen dem Abstand d zwischen einer lichtempfindlichen Fläche des Pixelsensors (52) und der strukturierter Oberfläche (14), einer mittleren Periode 1 der Oberflächenstruktur der strukturierten Oberfläche (14), der Amplitude h der Oberflächenstruktur der strukturierten Oberfläche (14) und des Pixelmittenabstands dp besteht:

$$0{,}1 \cdot d_p \leq \frac{0{,}7 \cdot h}{l} \cdot d \leq 10 \cdot d_p \,.$$

14. Verfahren zum Erzeugen einer Aufnahme, mit
   Projizieren eines Bildes auf einen Pixelsensor (52), so dass sich an Pixeln des Pixelsensors (52) konvergierende Strahlenbündel (20) treffen, unter Anordnung eines optischen Aliasfilters (10) zwischen dem Pixelsensor (52) und der zur Projektion verwendeten abbildenden Optik (54), wobei das optische Aliasfilter in Form einer Platte (12) mit einer strukturierten Oberfläche (14) gebildet ist, die eine Oberflächenstruktur aufweist, die ein Ortsfrequenzspektrum (30) aufweist, das sich zu mehr als 85% in einem Ortsfrequenzbereich (32) von einer Periodenlänge von 10 Mikrometern bis zu einer Periodenlänge von Zwei mal dem Sinus der Hälfte eines bildseitigen Öffnungswinkels der abbildenden Optik (54) multipliziert mit einem Abstand (d) zwischen der strukturierten Oberfläche und einer lichtempfindlichen Fläche des Pixelsensors (52) befindet.

FIGUR 1

Intensität

26

I_PSF

Ort

# FIGUR 2A

Intensität

28

28a

28b

I_PSF

Ort

# FIGUR 2B

FIGUR 2C

FIGUR 2D

FIGUR 3

EP 2 306 234 A2

FIGUR 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6040857 A
- US 6326998 B
- US 4178611 A
- US 4998800 A
- US 4878737 A